# FASCICULE DE BREVET EUROPEEN

(11) **EP 2 132 429 B1**
(45) Date de publication et mention de la délivrance du brevet: **11.09.2013**
(21) Numéro de dépôt: 08788069.6
(22) Date de dépôt: 28.03.2008
(51) Int. Cl.: F02K 9/95, F02K 9/52

(54) **ALLUMEUR ÉLECTROLYTIQUE POUR MOTEUR-FUSÉE À MONERGOL**
ELEKTROLYTISCHER ANZÜNDER FÜR EINEN RAKETENMOTOR MIT MONERGOL-TREIBSTOFF
ELECTROLYTIC IGNITER FOR ROCKET ENGINES USING MONOPROPELLANTS

(30) Priorité: 30.03.2007 FR 0754173
(43) Date de publication de la demande: 16.12.2009
(73) Titulaire: Snecma, 75015 Paris (FR)
(72) Inventeur: VALENTIAN, Dominique, F-78710 Rosny Sur Seine (FR)
(74) Mandataire: Thévenet, Jean-Bruno
(86) Numéro de dépôt international: PCT/FR2008/050543
(87) Numéro de publication internationale: WO 2008/135695

(56) Documents cités:
- US-A- 3 651 644
- US-A- 3 861 137
- US-A- 4 821 509
- US-A- 5 425 231
- US-A- 6 084 198

## Description

### Domaine de l'invention

La présente invention a pour objet un allumeur électrolytique pour moteur-fusée à monergol et un moteur-fusée à monergol équipé d'un tel allumeur électrolytique.

### Art antérieur

Les moteurs-fusées alimentés par ergols liquides sont généralement allumés soit par allumage hypergolique soit par allumage pyrotechnique, soit par allumage électrique à torche.

L'allumage hypergolique fait appel à des ergols hypergoliques, tels que le mono-méthyl hydrazine (MMH) et le peroxyde d'azote (N₂O₄), qui sont bien connus, mais présentent une toxicité élevée et offrent une impulsion spécifique pratiquement limitée à 330 secondes.

Quelques moteurs-fusées oxygène liquide/hydrocarbure sont allumés par injection de liquide hypergolique avec l'oxygène liquide, en utilisant par exemple un organométallique (comme dans le cas du moteur RD-180 de la société russe NPO Energomash).

Toutefois, l'allumage hypergolique introduit une complication supplémentaire. Certains liquides hypergoliques avec l'oxygène, comme les organométalliques, sont spontanément combustibles dans l'air, toxiques et causent des brûlures par contact. Ils posent donc des problèmes de sécurité.

Les combinaisons d'ergols non hypergoliques, par exemple oxygène liquide/hydrogène liquide ou oxygène liquide/hydrocarbure sont généralement allumées soit par une charge pyrotechnique (moteurs par une VULCAIN et HM 7), soit par une torche (moteur VINCI). Un allumeur électrique (bougie) est aussi utilisé sur certains moteurs cryotechniques. Les allumeurs à torche comprennent en général une bougie d'allumage. Dans les deux cas, la haute tension utilisée (10 à 20 kV) peut créer des difficultés. L'allumeur à torche ou à bougie présente un avantage décisif sur l'allumage pyrotechnique : le nombre d'allumages est pratiquement illimité.

Une quatrième solution, l'allumage catalytique, est utilisée avec des monergols à décomposition exothermique (hydrazine, peroxyde d'hydrogène) ou des mélanges gazeux (oxygène/hydrogène). L'hydrazine est un monergol à décomposition catalytique qui présente aussi une toxicité élevée.

Récemment, de nouveaux monergols non toxiques sont apparus : il s'agit de nitrates en solution dans l'eau avec addition de combustible. Le sel de nitrate peut être constitué par exemple par du nitrate d'hydroxylammonium (HAN), du di-nitramide d'ammonium (ADN) ou du nitro-formate d'hydrazinium (HNF).

Les monergol liquides à base de nitrates organiques, comme le nitrate d'isopropyle, ont été utilisés en décomposition spontanée sous pression élevée, ce qui permet d'éviter l'utilisation d'un catalyseur (la pression de la chambre de combustion étant de 3 à 5 MPa). Cette disposition a été utilisée en particulier pour le sustentateur individuel « Ludion » développé durant les années soixante par la SEPR. La réaction était amorcée par une charge pyrotechnique. Cette solution est cependant limitée à un usage unique, ou à un petit nombre d'allumages si l'on utilise des charges pyrotechniques multiples. Une telle limitation est donc incompatible avec les applications nécessitant un grand nombre d'allumages successifs.

Or, les allumages multiples sont absolument nécessaires dans un certain nombre de cas, comme par exemple :
- la commande d'orientation de satellites ou d'atterrisseurs planétaires,
- l'atterrissage avec rétrofusées fonctionnant en mode pulsé, pour une propulsion principale,
- l'étage supérieur d'un lanceur à charges utiles multiples.

Pour des applications nécessitant des allumages multiples, il est alors souvent utilisé un allumeur électrique (bougie, torche,...) ou hypergolique.

L'allumage à bougie ne donne cependant pas une énergie suffisante pour assurer la montée en pression initiale.

L'allumage à torche nécessite l'utilisation d'autres ergols à l'état gazeux, car le monergol est à l'état liquide. Cela introduit une complication supplémentaire.

L'allumage hypergolique introduit une complication analogue à un système de propulsion bi-ergols (par exemple du type MMH/N₂O₄).

Il existe cependant: également un autre procédé qui consiste à chauffer rapidement l'ergol propulsif par voie électrolytique. Un tel procédé est décrit par exemple dans le brevet français n° 1 598 903 relatif à un propulseur électrothermique et à son dispositif d'alimentation.

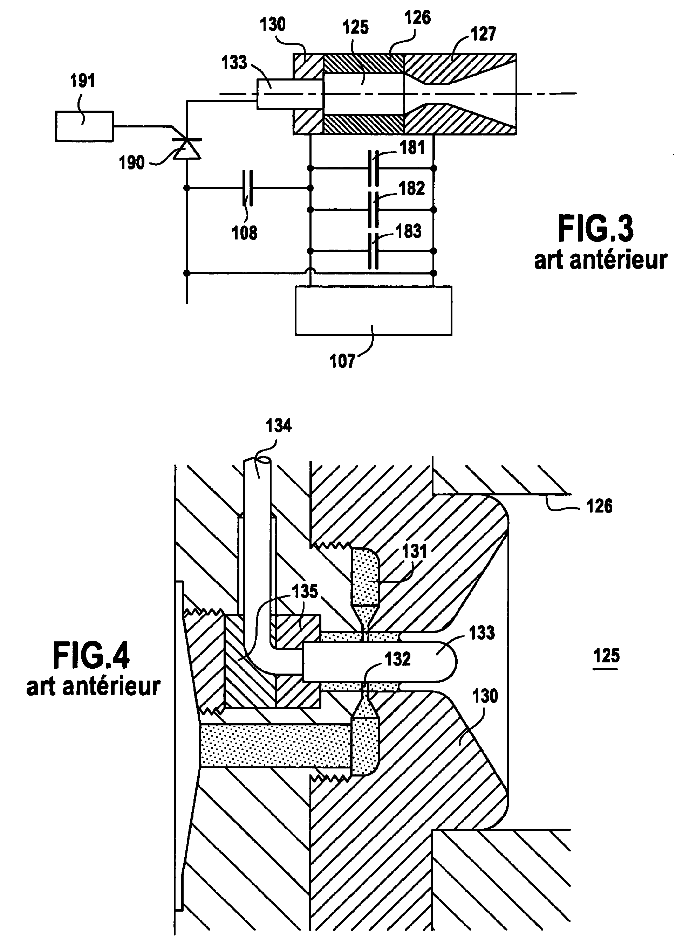

La Figure 3 montre le schéma de principe du circuit électrique d'un tel propulseur à plasma à amorçage électrolytique.

Un thyristor 190, ou un transistor de puissance, commandé par un circuit de commande 191, permet de mettre sous tension deux électrodes 133, 130 coaxiales, baignées par l'ergol propulsif (qui en l'espèce est de la glycérine rendue conductrice par addition d'iodure de sodium). Sous l'effet de la tension imposée par un condensateur 108, l'échauffement par effet Joule de la solution électrolytique conduit rapidement (en moins d'une milliseconde) à l'ébullition puis à la formation d'une décharge plasma dans le canal qui entoure l'électrode centrale 133.

Pour un courant maximum de 50 A et une tension de 400 V, la puissance instantanée peut atteindre 20 kW pour 10 mg de matière.

Pour atteindre une enthalpie de 1 MJ/Kg, où l'ergol propulsif est déjà volatilisé, il suffit de 50 µs. Cette décharge amorce à son tour la décharge principale dans une chambre d'ionisation 125 entourée d'une gaine isolante 126 prolongée par une tuyère 127 qui constitue également l'anode de la chambre d'arc. La puissance instantanée atteint 1 MW et l'énergie (300 J) est suffisante pour former une enthalpie moyenne de 30 MJ/kg.

Une batterie de condensateurs 181, 182, 183 principale et le condensateur auxiliaire 108 sont chargés par un circuit d'alimentation 107 unique.

La Figure 4 montre en vue de détail l'électrode centrale 133 et la cathode 130 qui déterminent un espace annulaire 132 rempli de liquide 131 par effet capillaire. L'électrode centrale 133 est reliée à un conducteur 134 connecté au thyristor 190. Le plasma de pré-décharge débouche dans la chambre de décharge 125.

L'allumage électrolytique a été aussi proposé dans les années 70 pour réaliser la décomposition de l'hydrazine. Le brevet US 3 861 137 intitulé "Monopropeliant electrolytic igniter" ("Allumeur électrolytique à monergol") décrit un système utilisant deux électrodes poreuses et un feutre céramique constituant l'isolant entre les deux électrodes. La tension inter-électrodes est comprise entre 2 et 30 V. L'allumage résulte de la combinaison de l'échauffement, de la formation d'ions par électrolyse et de l'action catalytique d'une couche non-conductrice de ruthénium sur l'isolant. La décomposition se poursuit sur des grilles placées en aval.

Le brevet US 3 651 644 intitulé "Apparatus for initiating the décomposition of an exothermic propellant" ("Appareil pour initier la décomposition d'un ergol exothermique") décrit un système de parois coaxiales s'étendant sur toute la longueur d'une chambre de combustion. Le monergol utilisé est principalement de l'hydrazine. La tension inter-électrodes est de l'ordre de 28 V. Il n'est pas prévu que l'électrolyse puisse initier une décharge. Un lit thermique parachève la décomposition.

Dans les deux cas précités, l'objectif visé est d'augmenter le rapport surface/épaisseur, la résistivité de l'hydrazine étant élevée.

Un article plus récent (Characterisation and electrical ignition of ADN based liquid monopropellants ("Caractérisation et allumage électrique de monergols liquides à base d'ADN"). Anders Larsson, Niklas Wingborg, Mattlas Elfberg, Patrick Appelgren, May 2005. ISSN 1650.1942) décrit un dispositif expérimental permettant d'obtenir l'allumage électrolytique d'une solution d'ADN. Le liquide est confiné dans un tube diélectrique (D = 9 mm L = 25 mm). Il est soumis à une tension de 5 000 V fournie par une batterie de condensateurs. L'allumage est obtenu en quelques millisecondes. La tension élevée est rendue nécessaire par le rapport longueur/section de la colonne de liquide.

On connaît encore par le brevet US 6 084 198 un dispositif d'amorçage de la décharge d'un propulseur MPD (magnéto-plasma dynamique) qui utilise une électrode auxiliaire en relation avec un milieu gazeux basse pression de décharge d'amorçage.

### Objet et description succincte de l'invention

L'invention vise à remédier aux inconvénients précités et notamment à permettre la réalisation d'un allumeur présentant plus de souplesse d'utilisation qu'un allumeur pyrotechnique.

En particulier, l'invention vise à permettre des allumages multiples qui sont absolument nécessaires au moins dans les cas suivants :
- étage supérieur à charges utiles multiples,
- commande d'orientation de lanceurs ou d'atterrisseurs planétaires,
- atterrissage avec rétrofusées fonctionnant en mode pulsé pour mission planétaire (propulsion principale utilisant des ergols non toxiques).

L'invention vise également à permettre le fonctionnement d'un allumeur aussi bien sous vide que sous pression ou en simulation d'altitude.

L'invention a encore pour objet de proposer un allumeur de construction simplifiée appliqué à un moteur-fusée à monergol liquide et qui en particulier ne pose pas de problèmes de sécurité, et autorise l'allumage fiable d'une chambre de combustion, quelle que soit la taille de celle-ci, avec la fourniture d'une puissance instantanée très élevée.

Ces buts sont atteints conformément à l'invention grâce à un moteur-fusée à monergol comprenant une chambre de combustion principale, un allumeur électrolytique et un injecteur principal, l'allumeur électrolytique comprenant un injecteur constituant une première électrode et: incluant un dispositif d'injection d'un premier monergol liquide électriquement conducteur, une deuxième électrode isolée électriquement de l'injecteur par un isolateur, un réservoir pour ledit premier monergol, une électrovanne interposée entre ledit réservoir et un canal de distribution servant à distribuer le premier monergol dans ledit dispositif d'injection du premier monergol constitué par au moins un trou d'injection débouchant au voisinage de la deuxième électrode et un circuit d'alimentation électrique, l'injecteur principal étant situé au voisinage de la deuxième électrode pour injecter des jets d'un deuxième monergol liquide dans la chambre de combustion principale de moteur-fusée, caractérisé en ce que la deuxième électrode s'étend en aval au-delà de l'injecteur, en ce que le premier monergol liquide est injecté par ledit trou d'injection sous la forme d'un jet libre qui vient frapper la deuxième électrode dans une zone située en dehors du corps de l'injecteur et en ce que le circuit d'alimentation électrique est adapté pour porter la deuxième l'électrode à un potentiel compris entre 50 et 1000 V par rapport au potentiel de la première électrode, de telle sorte que la dissipation de puissance électrique par conduction ionique dans un jet libre du premier monergol injecté par ledit trou d'injection est à même de provoquer une élévation de température suffisante pour provoquer la décomposition spontanée du premier monergol et la production de gaz de combustion assurant l'inflammation de jets du deuxième monergol issus de l'injecteur principal.

Avantageusement, la dissipation de puissance électrique par conduction ionique dans un jet libre du premier monergol injecté par le trou d'injection est comprise entre 100 et 1000 W par gramme par seconde et: est à même de provoquer une élévation de température de 5000 à 20 000°C/s.

Avantageusement, le circuit d'alimentation électrique est adapté pour porter la deuxième électrode à un potentiel compris entre 100 et 500 V par rapport au potentiel de la première électrode constituée par l'injecteur.

Selon l'invention, le premier monergol présent dans le réservoir peut être constitué par le même produit que le deuxième monergol appliqué par le dispositif d'injection de deuxième monergol.

Le premier monergol peut avantageusement comprendre une solution aqueuse de nitrate et un combustible soluble dans l'eau.

La solution aqueuse de nitrate peut comprendre le nitrate d'hydroxylammonium, le di-nitramide d'ammonium ou le nitroformate d'hydrazinium.

Le combustible soluble dans l'eau peut comprendre un alcool ou le nitrate de triéthanolammonium.

Le processus d'allumage a lieu de la manière suivante : un ou plusieurs jets de liquide électrolytique (premier monergol) issus de l'injecteur constituant une première électrode viennent frapper la deuxième électrode située à un potentiel de quelques certaines de volts par rapport au potentiel de l'injecteur. Cela introduit une densité de courant élevée dans l'électrolyte constitué par le premier monergol, conduit à son échauffement rapide, puis éventuellement à la formation d'un arc électrique.

L'allumage peut se produire selon une ou plusieurs des manières suivantes :
- par formation de l'arc électrique par claquage dans le flux de vapeur,
- dans la masse du liquide par augmentation de température conduisant à la décomposition spontanée du liquide monergol,
- par formation d'espèces chimiques actives aux électrodes.

Selon un mode de réalisation possible, la deuxième électrode est: disposée de façon centrale et une pluralité de trous d'injection du premier monergol et les sorties de l'injecteur principal sont disposés autour de cette électrode centrale.

Selon une variante de réalisation, le dispositif d'injection du premier monergol comprend un canal annulaire.

La deuxième électrode peut être réalisée en un métal réfractaire du type tungstène ou tungstène-rhénium.

Le circuit d'alimentation électrique peut comprendre une source d'alimentation électrique en courant continu, au moins un condensateur et un interrupteur, tel qu'un transistor de puissance ou un thyristor. Dans ce cas, l'injecteur constituant la première électrode présente avantageusement un potentiel proche de la masse électrique.

Selon une variante de réalisation, le circuit d'alimentation électrique peut comprendre une source d'alimentation en courant continu, au moins un condensateur, un circuit hacheur et un transformateur élévateur de tension dont le primaire et le secondaire sont isolés galvaniquement, dont le primaire est relié au circuit hacheur et dont le secondaire est connecté entre la deuxième électrode et l'injecteur constituant la première électrode.

Selon une caractéristique particulière de l'invention, l'isolateur comprend une première partie d'isolateur pouvant se dilater librement et une deuxième partie d'isolateur assurant une étanchéité entre la deuxième électrode et un support d'isolateur.

Dans ce cas, la première partie d'isolateur comprend au moins un bloc de céramique réalisé en nitrure de bore ou en alumine.

La deuxième partie d'isolateur peut être réalisée en alumine et est brasée d'une part sur la deuxième électrode et d'autre part sur le support d'isolateur.

Selon une variante de réalisation, la deuxième partie d'isolateur est réalisée en un matériau souple comprenant l'un des matériaux suivants : le PTFE, le PTFCE, le VESPEL, le PTFE chargé de fibres de verre, et la deuxième partie d'isolateur est montée dans un presse-étoupe monté sur le support d'isolateur.

Selon une autre variante de réalisation, la deuxième partie d'isolateur est combinée à une embase de câble coaxial recevant un connecteur de câble coaxial.

### Brève description des dessins

D'autres caractéristiques et avantages de l'invention ressortiront de la description suivante de modes particuliers de réalisation, donnés à titre d'exemples, en référence aux dessins annexés, sur lesquels :
- la figure 1 est une vue schématique en coupe axiale d'une tête d'allumeur électrolytique avec anode centrale selon un premier mode de réalisation de l'invention,
- la figure 2 est une vue de face de la tête d'allumeur électrolytique selon la revendication 1,
- la figure 3 est une vue schématique du circuit électrique d'un propulseur à plasma connu à amorçage électrolytique,
- la figure 4 est une vue en coupe axiale d'un exemple de chambre de prédécharge dans un propulseur électrothermique selon l'art antérieur, antérieur,
- la figure 5 est une vue schématique en coupe axiale d'une tête d'allumeur électrolytique avec injection annulaire, selon un deuxième mode de réalisation de l'invention,
- la figure 6 est une vue schématique en coupe axiale montrant l'intégration d'une tête d'allumeur selon l'invention dans un injecteur principal et une chambre de combustion,
- la figure 7 est une vue schématique en coupe axiale d'une variante de réalisation d'une tête d'allumeur électrolytique selon l'invention avec un isolateur en deux parties,
- la figure 8 est une vue schématique en coupe axiale d'une variante de réalisation d'une tête d'allumeur électrolytique selon l'invention avec un isolateur associé à un presse-étoupe,
- la figure 9 est une vue schématique en coupe axiale d'une variante de réalisation d'une tête d'allumeur électrolytique selon l'invention avec une sortie hermétique coudée,
- la figure 10 est une vue schématique en coupe axiale d'une variante de réalisation d'une tête d'allumeur électrolytique avec circuit électrique de puissance incorporé, et
- la figure 11 est une vue schématique d'une tête d'allumeur électrolytique selon l'invention avec un circuit d'alimentation électrique incorporant un transformateur élévateur de tension.

### Description détaillée de modes particuliers de réalisation de l'invention

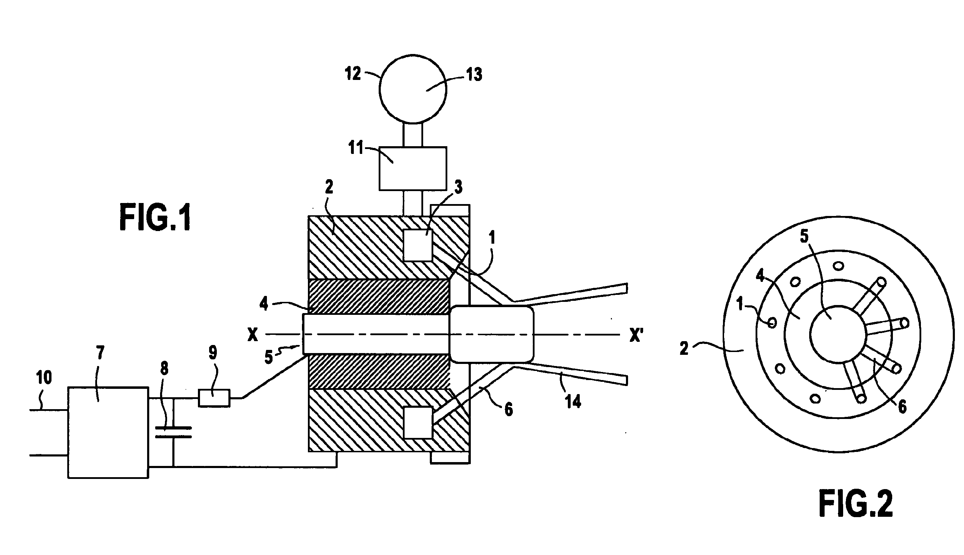

Si l'on se reporte à la figure 1, on voit un premier exemple d'allumeur électrolytique selon l'invention conçu pour être incorporé à un injecteur principal destiné à être monté sur une chambre de combustion de moteur-fusée à monergol.

L'allumeur électrolytique comprend un injecteur 2 qui, dans l'exemple considéré, présente un potentiel proche de la masse électrique et constitue une cathode.

L'injecteur 2 comprend un dispositif d'injection d'électrolyte avec un canal 3 de distribution d'électrolyte associé à au moins un trou 1 d'injection, ou de préférence une pluralité de trous 1 d'injection qui permettent la projection de jets libres vers une électrode centrale 5 qui est isolée électriquement du corps de l'injecteur 2 par un isolateur 4.

L'électrode centrale 5 qui, dans l'exemple considéré, forme une anode, s'étend axialement vers l'aval au-delà de l'injecteur 2.

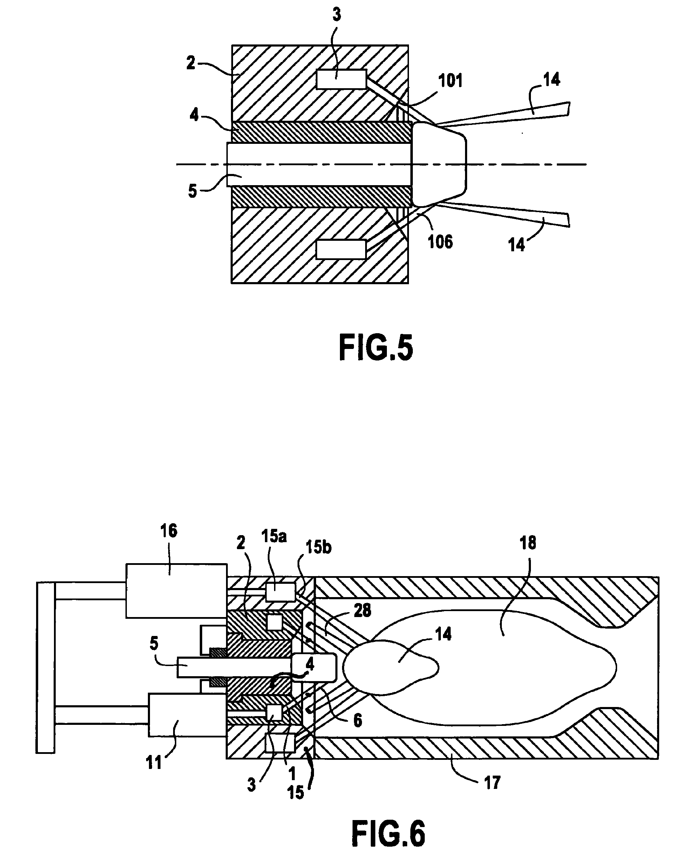

Le distributeur 3 d'électrolyte est alimenté à travers une électrovanne 11 à partir du réservoir 12 contenant un électrolyte 13 qui est avantageusement constitué par un produit différent du monergol appliqué par le dispositif d'injection 15 de l'injecteur principal (voir Figure 6).

Dans le mode de réalisation des figures 1 et 2, les trous 1 d'injection d'électrolyte sont répartis en couronne autour de l'axe XX'.

A titre de variante, comme représenté sur la figure 5, le dispositif d'injection de monergol électrolytique peut comprendre un canal annulaire produisant une nappe conique 106 permettant éventuellement d'avoir un plus gros débit.

Dans l'exemple de la figure 1, on a représenté schématiquement un circuit d'alimentation électrique avec une source 7 d'alimentation en courant continu à partir d'une barre 10. Le pôle négatif de la source d'alimentation 7 est relié au corps de l'injecteur 2 qui constitue ainsi une cathode. Le pôle positif de la source d'alimentation 7 est relié par l'intermédiaire d'un interrupteur 9 à l'électrode centrale 5 formant anode.

Un condensateur 8 est connecté en parallèle à la sortie de la source d'alimentation 7 de manière à permettre l'application d'un potentiel de l'ordre de quelques centaines de volts sur l'électrode 5. La décharge du condensateur 8 permet d'obtenir une puissance instantanée très élevée. L'interrupteur 9 peut être constitué par exemple par un transistor de puissance ou par un thyristor.

L'électrovanne 11 commande l'injection des jets d'électrolyte. Lorsque cette électrovanne 11 est ouverte, les jets d'électrolyte 6 (Figure 1) ou 106 (Figure 5) issus des trous d'injection 1 ou du canal annulaire 101 mettent en contact l'électrode centrale 5 formant anode et le corps de l'injecteur 2 formant cathode.

L'échauffement dû au courant d'électrolyse entraîne la formation d'une décharge électrique qui à partir des jets 6 chauffés par électrolyse ou de la nappe conique 106 chauffée par électrolyse, produit des jets enflammés 14.

La figure 2 montre un injecteur 2 avec à titre d'exemple neuf trous 1 d'injection d'électrolyte. Le nombre de trous d'injection est choisi en fonction du débit à assurer.

La partie gauche de la figure 2 montre injecteur avant une séquence d'allumage et la partie droite de cette figure 2 montre l'injecteur en fonctionnement avec des jets d'électrolytes.

Il est important de noter que les jets d'électrolyte 6 issus des trous d'injection 1 sont situés en aval de l'injecteur 2 qui produit le mélange de gaz à allumer et viennent frapper l'électrode 5 dans une zone située en dehors du corps de l'injecteur 2.

La densité du courant élevée dans l'électrolyte, l'échauffement rapide de cet électrolyte et la formation éventuelle d'un arc électrique se produisent ainsi au sein de la torche en aval de l'injecteur 2 et non à l'intérieur de l'injecteur.

Contrairement à des dispositifs de l'art antérieur, l'électrolyse a lieu dans un jet libre et non dans un espace confiné entre deux électrodes.

L'alimentation électrique sous une tension relativement élevée, de 50 V à 1.000 V ou de préférence de 100 à 500 V, permet de passer à un claquage dans la vapeur après échauffement du liquide. Le niveau de tension électrique reste cependant suffisamment modeste pour qu'il n'existe pas de problèmes d'isolation électrique.

Le liquide électrolytique 13 est constitué d'un monergol non toxique à base de nitrates qui comprend une solution aqueuse de nitrate (comme par exemple HAN = nitrate d'hydroxylammonium, ADN = dinitramide d'ammonium, HNF = nitro-formate d'hydrazinium) avec addition d'un combustible soluble dans l'eau tel qu'un alcool ou le TEAN (nitrate de triéthanolammonium).

L'allumage d'une auto-décomposition d'un monergol nitrate en solution ionique peut être obtenu par chauffage électrolytique.

Les solutions aqueuses de nitrates présentent une conductibilité ionique "C" importante qui augmente avec la température T (voir le document : "New nitrogen based monopropellants (HAN, AND, HNF), physical chemistry of concentrated ionic aqueous solutions" ("Nouveaux monergols à base d'azote (HAN, AND, HNF), chimie physique de solutions aqueuses ioniques concentrées"), C. Kappenstein, N. Pillet, A. Melchior.

Elle atteint 0,05 (Ω.cm)⁻¹ à -12°C et 70 % de concentration et 0,2 (Ω.cm)⁻¹ à +40°C. Elle suit une loi du type : ln(C) = 1/(T - To).

La disposition à jets libres 6 selon l'invention présente une résistance élevée et permet de fonctionner à tension élevée, de l'ordre de plusieurs centaines de volts. L'échauffement se produit à l'extérieur de l'injecteur. Si le jet s'enflamme avant d'atteindre l'électrode centrale 5, les gaz peuvent se détendre librement dans la chambre de combustion.

Lorsqu'un film de vapeur se produit sur l'électrode centrale 5 (la partie la plus chaude du jet) le passage du courant est interrompu et la totalité de la tension se retrouve sur le film. Le produit pression x distance étant en dessous du minimum de Paschen, il y a claquage et l'étincelle enflamme le reste du mélange chauffé.

Le chauffage peut entraîner l'évaporation sélective (la distillation) de l'espèce la plus volatile, par exemple un alcool. Les vapeurs d'alcool mélangées à l'air faciliteront l'inflammation.

L'exemple suivant donne un ordre de grandeur des paramètres physiques de la décharge dans le cas d'un injecteur à jets multiples :
Jet élémentaire :

| | |
|---|---|
| Diamètre | 1 mm |
| Longueur | 5 mm |
| Vitesse | 3 m/s |
| Débit masse | 3,3 g/s |
| Tension | Vo = 500 V |

La température de l'ergol est à 298 K à la sortie de l'injecteur

La puissance initiale dissipée est de 600 W (résistance = 410 Ohm).

Au bout de 2 ms, le profil de température du jet commence à se stabiliser, la partie aval du jet atteint 398 K (125°C).

La puissance dissipée atteint 1560 W et la résistance du jet est 160 Ohm.

Pour une tête d'allumeur à 5 orifices, on obtient le bilan suivant :

| | |
|---|---|
| Puissance initiale | = 3 000 W |
| Puissance à 2 ms | = 7 800 W |
| Débit | = 16,5 g/s |

A titre de comparaison, la puissance thermique fournie par la décomposition exothermique du monergol au débit de 16,5 g/s est supérieure à 50 kW.

La puissance électrique est fournie par le condensateur 8 capable de stocker au moins le double de l'énergie dissipée dans la décharge.

Le courant d'électrolyse atteint 15,6 A, ce qui peut être contrôlé par un interrupteur 9 constitué par un transistor de puissance.

Le condensateur 8 est chargé - de préférence à courant constant - par un convertisseur continu/continu 7 élévateur de tension alimenté par la barre 10 (bus) du satellite ou du missile sur lequel est placé le moteur-fusée équipé de l'allumeur électrolytique.

L'injection de monergol est contrôlée par l'électrovanne 11, la mise sous tension étant simultanée (il n'y aura pas de passage de courant avant 5 à 10 ms, temps de réponse de l'électrovanne).

Lorsque l'allumage est obtenu, le passage du courant peut être interrompu par fermeture de l'interrupteur 9 constitué par un transistor de puissance ou un thyristor.

L'interruption du courant provoque la fermeture de l'électrovanne 11 et donc l'interruption du jet liquide.

A titre de variante, l'énergie peut être stockée dans une batterie d'accumulateurs à décharge rapide.

Selon l'invention, l'allumage ayant lieu dans un liquide il est peu sensible à la pression l'allumeur peut fonctionner aussi bien sous vide (l'ébullition du liquide n'est pas immédiate) que sous pression (de la pression atmosphérique à plusieurs MPa). Il peut aussi fonctionner en stimulation d'altitude (quelques centaines de pascals).

Au contraire, les allumeurs à bougle et étincelle électrique peuvent être perturbés par une pression de fonctionnement différente du vide spatial ou de la pression atmosphérique :

Le fonctionnement en simulation d'altitude ou dans la haute atmosphère peut conduire à des problèmes d'isolation dans l'alimentation et le câblage car la tension de fonctionnement est très élevée (10 à 20 kV).

Le fonctionnement sous forte pression devient difficile : le pouvoir isolant du gaz augmente, compliquant l'allumage.

L'allumeur électrolytique utilise une tension modeste, de l'ordre de 500 V ce qui simplifie les problèmes d'isolations en particulier dans la zone de pression correspondant au fonctionnement de simulation d'altitude.

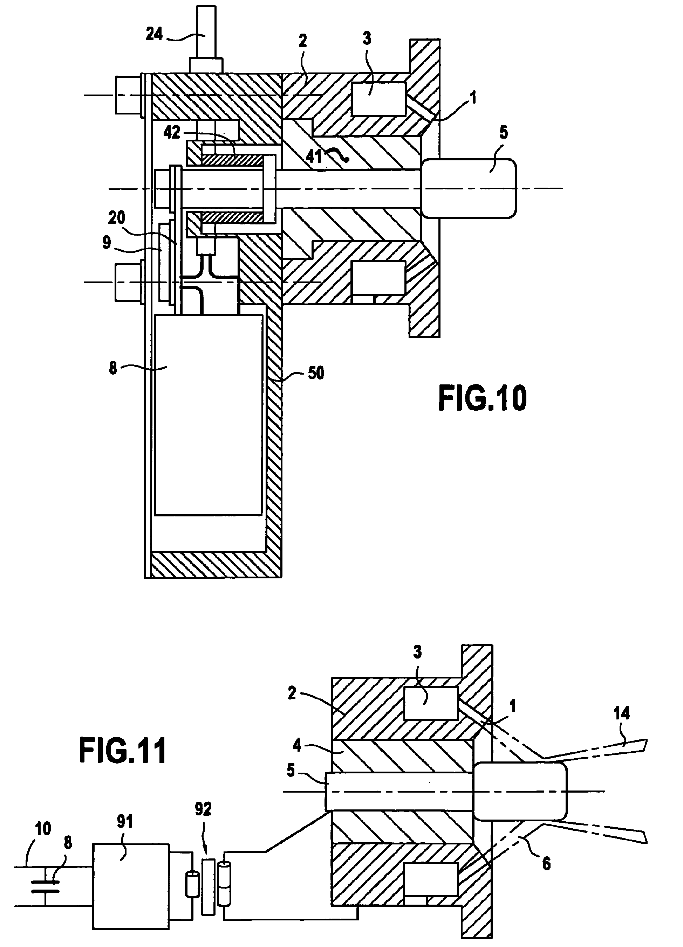

Sur la figure 11 on a représenté une variante de réalisation selon laquelle l'électrolyse est conduite en courant alternatif.

A partir d'une source de courant continu telle que la barre 10 du satellite ou du missile sur lequel est placé le moteur-fusée équipé de l'allumeur électrolytique, l'énergie est stockée dans des super condensateurs 8 ou dans une batterie d'accumulateurs qui alimentent un hacheur 91 constitué de transistors de puissance (par exemple des IGBT) capables de contrôler un courant de 100 A ou plus à une fréquence comprise entre 10 et 100 kHz et un transformateur élévateur de tension 92, de préférence à ferrite, dont le secondaire alimente directement l'allumeur électrolytique, entre la première électrode constituée par le corps de l'injecteur 2 et la deuxième électrode constituée par l'électrode 5.

Le fonctionnement du transformateur 92 et des transistors du circuit 91 étant bref (quelques dizaines de millisecondes), il n'est pas nécessaire de prévoir un refroidissement important.

On a décrit en référence aux figures 1, 2 et 11 un allumeur électrolytique comportant une électrode centrale 5.

La dissipation de puissance électrique par conduction ionique dans le jet d'électrolyte provoque une élévation de température suffisante pour provoquer le claquage électrique de l'électrolyte et sa décomposition spontanée dans la mesure où l'électrolyte est un monergol, de sorte qu'il est créé des jets enflammés à la sortie de l'injecteur principal 15 (figure 6) qui entoure l'allumeur électrolytique.

Sur la figure 6, on voit l'intégration de l'allumeur électrolytique, avec son injecteur 2 et son électrode centrale 5, dans l'injecteur principal 15 qui comprend essentiellement un dispositif d'injection de monergol comprenant un distributeur 15a et des canaux d'injection 15b répartis en couronne et débouchant dans la chambre de combustion 17 autour de l'électrode centrale 5 et des trous 1 d'injection de l'allumeur électrolytique.

L'allumeur électrolytique est ainsi incorporé dans l'injecteur principal 15 de la chambre de combustion 17 du moteur-fusée et situé dans l'axe de celui-ci. Sur la figure 6 on voit les jets 6 du monergol électriquement conducteur issus des trous d'injection 1 et venant frapper l'anode centrale 5, la zone 14 des gaz de combustion de l'allumeur, les jets 28 de monergol issus des canaux 15b de l'injecteur principal 15 et venant dans la zone 14 des gaz de combustion de l'allumeur pour être à leur tour enflammés et créer une flamme principale 18. La paroi de la chambre de combustion 17 peut être de type ablatif.

Le distributeur 15a est alimenté par l'intermédiaire d'une vanne principale 16, qui peut être pneumatique, électropneumatique ou électrohydraulique (en étant commandée par le monergol sous pression) tandis que le distributeur 3 est alimenté à partir d'une électrovanne 11.

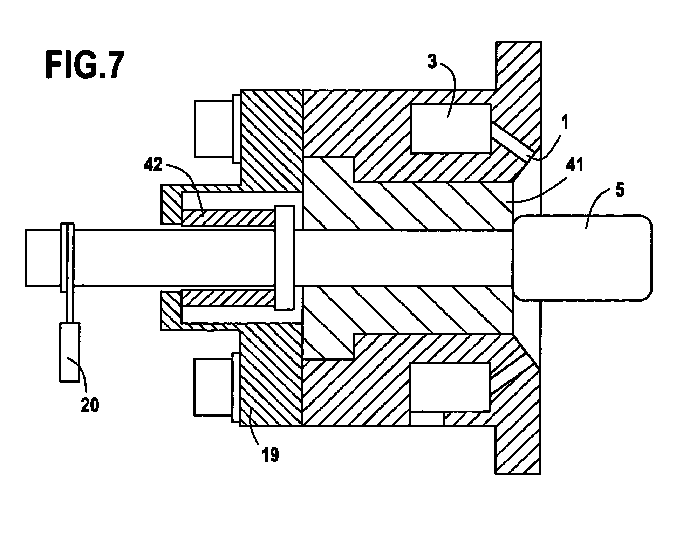

Les figures 7 à 10 illustrent des modes particuliers de réalisation de l'isolateur interposé entre l'électrode centrale 5 formant la deuxième électrode et le corps de l'injecteur 2 formant la première électrode. Comme dans le cas des figures 1, 2, 5, 6 et 11, pour des raisons de simplification, on n'a pas représenté sur les figures 7 à 10 l'injecteur principal 15.

Sur les figures 7 à 10 on n'a pas non plus représenté l'ensemble du circuit d'alimentation électrique, qui peut être analogue à ceux décrits en référence aux figures 1 et 11, ni les éléments associés au distributeur 3 de liquide électrolytique tels que l'électrovanne 11 ou le réservoir 12.

La figure 7 montre un isolateur électrique réalisée en deux parties. La partie aval 41 située en regard de la chambre de combustion est un bloc de céramique monté avec un jeu mécanique de manière à pouvoir se dilater librement. La partie amont 42 assure l'étanchéité. Elle est brasée sur le support d'isolateur 19 et sur l'électrode centrale 5. Le montage permet de solliciter l'isolateur 41, 42 en compression (face à un effet de fond et à la pression de combustion).

La partie aval 41 peut être réalisée en nitrure de bore ou en alumine tendis que la partie amont 42 peut être en alumine.

Sur la figure 7, la référence 20 désigne une connexion électrique.

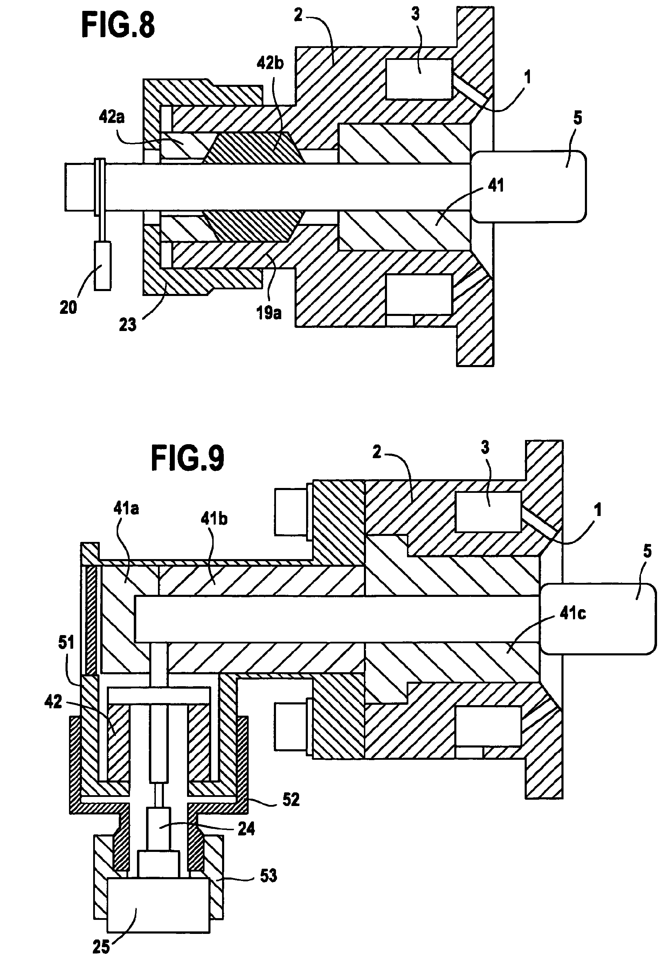

La figure 8 montre un isolateur électrique avec un presse-étoupe.

La partie aval 41 de l'isolateur électrique assure le rôle de paroi coupe-feu et peut être réalisée de façon analogue a la partie aval 41 du mode de réalisation de la figure 7.

L'étanchéité et le maintien de l'électrode central 5 sont assurés par un presse-étoupe composé d'un isolateur souple 42b situé a proximité de la partie aval 41, d'une rondelle 42a de poussée isolante et d'un écrou 23 qui est vissé sur une partie arrière 19a de l'injecteur 2.

L'isolateur souple 42b peut être réalisé en PTFE, PTFCE ou PTFE, chargé de fibres de verre ou en un matériau analogue tel que par exemple le produit de la société DuPont connu sous la dénomination VESPEL®,

La figure 9 montre un isolateur électrique en plusieurs parties qui vise à présenter un encombrement minimum.

Dans le cas de la figure 9, la partie aval de l'isolateur est elle-même divisée en deux ou trois parties 41a, 41b, 41c. La partie amont 42 de l'isolateur est réalisée de façon coudée. Elle peut être montée est maintenue en place par un obturateur métallique 51 vissé ou soudé sur la partie arrière de l'injecteur 2.

Le câble 24 d'alimentation électrique de l'électrode centrale 5 peut être raccordé à un câble coaxial 25 par un élément de raccord 53 associé à une embase 52 rapportée sur l'obturateur métallique 51.

Les modes de réalisation des figures 8 et 9 permettent de minimiser les interférences électromagnétiques provoquées par le coursant de décharge.

La figure 10 montre un exemple d'allumeur électrolytique avec un circuit de puissance incorporé dans un boîtier 50 rapporté sur le corps de l'injecteur 2. L'isolateur électrique peut être réalisé en deux parties 41, 42 comme dans le cas du mode de réalisation de la figure 7.

Le condensateur 8 et le transistor de puissance 9 formant interrupteur sont incorporés dans le boîtier 50.

La connexion 20 avec l'électrode centrale 5 peut être réalisée sous la forme d'un circuit imprimé supportant le transistor de puissance 9. Les liaisons électriques sont ainsi réduites à des câbles 24 de faible puissance qui sont légers et peuvent supporter des rayons de courbure faibles.

Dans les différents modes de réalisation décrits, l'électrode centrale 5 peut être réalisée en métal réfractaire du type tungstène ou tungstène/rhénium.

## Revendications

1. Moteur-fusée à monergol comprenant une chambre de combustion principale (17), un allumeur électrolytique et un injecteur principal (15), l'allumeur électrolytique comprenant un injecteur (2) constituant une première électrode et incluant un dispositif (1) d'injection d'un premier monergol liquide électriquement conducteur, une deuxième électrode (5) isolée électriquement de l'injecteur (2) par un isolateur (4), un réservoir (12) pour ledit premier monergol, une électrovanne (11) interposée entre ledit réservoir (12) et un canal (3) de distribution servant à distribuer le premier monergol dans ledit dispositif d'injection du premier monergol constitué par au moins un trou d'injection (1) débouchant au voisinage de la deuxième électrode (5) et un circuit d'alimentation électrique, l'injecteur principal étant situé au voisinage de la deuxième électrode (5) pour injecter des jets d'un deuxième monergol liquide dans la chambre de combustion principale (17) de moteur-fusée, **caractérisé en ce que** la deuxième électrode (5) s'étend en aval au-delà de l'injecteur (2), **en ce que** le premier monergol liquide est injecté par ledit: trou d'injection (1) sous la forme d'un jet libre qui vient frapper la deuxième électrode (5) dans une zone située en dehors du corps de l'injecteur (2) et **en ce que** le circuit d'alimentation électrique est adapté pour porter la deuxième l'électrode (5) à un potentiel compris entre 50 et 1000 V par rapport au potentiel de la première électrode, de telle sorte que la dissipation de puissance électrique par conduction ionique dans un jet libre du premier monergol injecté par ledit trou d'injection (1) est à même de provoquer une élévation de température suffisante pour provoquer la décomposition spontanée du premier monergol et la production de gaz de combustion (14) assurant l'inflammation de jets du deuxième monergol issus de l'injecteur principal (15).

2. Moteur-fusée selon la revendication 1, **caractérisé en ce que** la dissipation de puissance électrique par conduction ionique dans le jet libre du premier monergol injecté par le trou d'injection (1) est comprise entre 100 et 1000 W par gramme par seconde et est à même de provoquer une élévation de température de 5000 à 20 000°C/s.

3. Moteur-fusée selon la revendication 1 ou la revendication 2, **caractérisé en ce que** la deuxième électrode (5) est disposée de façon centrale et **en ce qu'**une pluralité de trous (1) d'injection du premier monergol et les sorties de l'injecteur principal (15) sont disposés autour de l'électrode centrale (5).

4. Moteur-fusée selon la revendication 1, **caractérisé en ce que** le dispositif d'injection du premier monergol comprend un canal annulaire (101).

5. Moteur-fusée selon l'une quelconque des revendications 1 à 4, **caractérisé en ce que** la deuxième électrode (5) est réalisée en métal réfractaire du type tungstène ou tungstène/rhénium.

6. Moteur-fusée selon l'une quelconque des revendications 1 à 5, **caractérisé en ce que** le premier monergol présent dans le réservoir (12) est: constitué par le même produit que le deuxième monergol appliqué par le dispositif (15) d'injection de deuxième monergol.

7. Moteur-fusée selon l'une quelconque des revendications 1 à 6, **caractérisé en ce que** le premier monergol comprend une solution aqueuse de nitrate et un combustible soluble dans l'eau.

8. Moteur-fusée selon la revendication 7, **caractérisé en ce que** la solution aqueuse de nitrate comprend du nitrate d'hydroxylammonium, du di-nitramide d'ammonium ou du nitroformate d'hydrazinium,

9. Moteur-fusée selon la revendication 7 ou la revendication 8, **caractérisé en ce que** le combustible soluble dans l'eau comprend un alcool ou du nitrate de triéthanolammonium.

10. Moteur-fusée selon l'une quelconque des revendications 1 à 9, **caractérisé en ce que** le circuit d'alimentation électrique comprend une source d'alimentation en courant continu (10, 7), au moins un condensateur (8) et un interrupteur (9) et **en ce que** l'injecteur (2) constituant la première électrode présente un potentiel proche de la masse électrique.

11. Moteur-fusée selon la revendication 10, **caractérisé en ce que** l'interrupteur (9) comprend un transistor de puissance ou un thyristor.

12. Moteur-fusée selon la revendication 10 ou la revendication 11, **caractérisé en ce que** le condensateur (8) et: l'interrupteur (9) sont logés dans un boîtier (50) silidaire du corps de l'allumeur.

13. Moteur-fusée selon l'une quelconque des revendications 1 à 9, **caractérisé en ce que** le circuit d'alimentation électrique comprend une source d'alimentation en courant continu (10), au moins un condensateur (8), un circuit hacheur (91) et un transformateur (92) élévateur de tension dont le primaire et le secondaire sont isolés galvaniquement, dont le primaire est relié au circuit hacheur (91) et dont le secondaire est connecté entre la deuxième électrode (5) et: l'injecteur (2) constituant la première électrode.

14. Moteur-fusée selon l'une quelconque des revendications 1 à 13, **caractérisé en ce que** l'isolateur (4) comprend une première partie d'isolateur (41) pouvant se dilater librement et une deuxième partie d'isolateur (42) assurant une étanchéité entre la deuxième électrode (5) et un support d'isolateur (19).

15. Moteur-fusée selon la revendication 14, **caractérisé en ce que** la première partie d'isolateur (41) comprend au moins un bloc de céramique réalisé en nitrure de bore ou en alumine.

16. Moteur-fusée selon la revendication 14 ou la revendication 15, **caractérisé en ce que** la deuxième partie d'isolateur (42) est réalisée en alumine et est brasée d'une part sur la deuxième électrode (5) et d'autre part sur le support d'isolateur (19).

17. Moteur-fusée selon la revendication 14 ou la revendication 15, **caractérise en ce que** la deuxième partie d'isolateur (42) est réalisée en un matériau souple comprenant l'un des matériaux suivants : le PTFE, le PTFCE, le VESPEL, le PTFE chargé de fibres de verre, et **en ce que** la deuxième partie d'isolateur (42) est montée dans un presse-étoupe (23) monté sur le support d'isolateur (19a).

18. Moteur-fusée selon la revendication 14 ou la revendication 15, **caractérisé en ce que** la deuxième partie d'isolateur (42) est combinée à une embase (52) de câble coaxial recevant un connecteur (25) de câble coaxial (24).

19. Moteur-fusée selon l'une quelconque des revendications 1 à 18, **caractérisé en ce que** le circuit d'alimentation électrique est adapté pour porter la deuxième électrode (5) à un potentiel compris entre 100 et 500 V par rapport au potentiel de la première électrode constituée par l'injecteur.

## Patentansprüche

1. Monergol-Raketentriebwerk, umfassend eine Hauptbrennkammer (17), einen elektrolytischen Zünder und einen Hauptinjektor (15), wobei der elektrolytische Zünder einen Injektor (2), welcher eine erste Elektrode bildet und eine Vorrichtung (1) zum Einspritzen eines ersten elektrisch leitenden flüssigen Monergols einschließt, eine zweite Elektrode (5), die durch einen Isolator (4) von dem Injektor (2) elektrisch isoliert ist, einen Behälter (12) für das erste Monergol, ein Elektroventil (11), das zwischen dem Behälter (12) und einem Verteilungskanal (3) zwischengeschaltet ist, welcher dazu dient, das erste Monergol in die Vorrichtung zum Einspritzen des ersten Monergols abzugeben, die durch wenigstens ein in der Nähe der zweiten Elektrode (5) ausmündendes Einspritzloch (1) gebildet ist, sowie einen Stromversorgungskreis umfaßt, wobei der Hauptinjektor in der Nähe der zweiten Elektrode (5) gelegen ist, um Strahlen eines zweiten flüssigen Monergols in die Hauptbrennkammer (17) des Raketentriebwerks einzuspritzen, **dadurch gekennzeichnet, daß** sich die zweite Elektrode (5) stromabwärts über den Injektor (2) hinaus erstreckt, daß das erste flüssige Monergol über das Einspritzloch (1) in Form eines freien Strahls eingespritzt wird, der in einem außerhalb des Körpers des Injektors (2) gelegenen Bereich auf die zweite Elektrode (5) trifft, und daß der Stromversorgungskreis dazu ausgelegt ist, die zweite Elektrode (5) auf ein Potential zwischen 50 und 1000 V gegenüber dem Potential der ersten Elektrode zu bringen, derart, daß die elektrische Verlustleistung durch Ionenleitung in einem freien Strahl des über das Einspritzloch (1) eingespritzten ersten Monergols geeignet ist, einen ausreichenden Temperaturanstieg herbeizuführen, um die spontane Zersetzung des ersten Monergols und die Erzeugung von Verbrennungsgasen (14) zu bewirken, welche die Entzündung von aus dem Hauptinjektor (15) stammenden Strahlen des zweiten Monergols sicherstellen.

2. Raketentriebwerk nach Anspruch 1, **dadurch gekennzeichnet, daß** die elektrische Verlustleistung durch Ionenleitung in dem freien Strahl des über das Einspritzloch (1) eingespritzten ersten Monergols zwischen 100 und 1000 W pro Gramm pro Sekunde liegt und geeignet ist, einen Temperaturanstieg von 5000 bis 20.000 °C/s zu bewirken.

3. Raketentriebwerk nach Anspruch 1 oder Anspruch 2, **dadurch gekennzeichnet, daß** die zweite Elektrode (5) mittig angeordnet ist und daß eine Vielzahl von Löchern (1) zum Einspritzen des ersten Monergols und die Auslässe des Hauptinjektors (15) um die mittlere Elektrode (5) herum angeordnet sind.

4. Raketentriebwerk nach Anspruch 1, **dadurch gekennzeichnet, daß** die Vorrichtung zum Einspritzen des ersten Monergols einen ringförmigen Kanal (101) umfaßt.

5. Raketentriebwerk nach einem der Ansprüche 1 bis 4, **dadurch gekennzeichnet, daß** die zweite Elektrode (5) aus hochschmelzendem Metall vom Typ Wolfram oder Wolfram/Rhenium ausgebildet ist.

6. Raketentriebwerk nach einem der Ansprüche 1 bis 5, **dadurch gekennzeichnet, daß** das in dem Behälter (12) vorhandene erste Monergol von dem gleichen Produkt wie das zweite Monergol, welches durch die Vorrichtung (15) zum Einspritzen von zweitem Monergol aufgebracht wird, gebildet ist.

7. Raketentriebwerk nach einem der Ansprüche 1 bis 6, **dadurch gekennzeichnet, daß** das erste Monergol eine wäßrige Nitratlösung und einen wasserlöslichen Brennstoff umfaßt.

8. Raketentriebwerk nach Anspruch 7, **dadurch gekennzeichnet, daß** die wäßrige Nitratlösung Hydroxylammoniumnitrat, Ammoniumdinitramid oder Hydraziniumnitroformat umfaßt.

9. Raketentriebwerk nach Anspruch 7 oder Anspruch 8, **dadurch gekennzeichnet, daß** der wasserlösliche Brennstoff einen Alkohol oder Triethanolammoniumnitrat umfaßt.

10. Raketentriebwerk nach einem der Ansprüche 1 bis 9, **dadurch gekennzeichnet, daß** der Stromversorgungskreis eine Gleichstromversorgungsquelle (10, 7), wenigstens einen Kondensator (8) und einen Schalter (9) umfaßt und daß der die erste Elektrode bildende Injektor (2) ein Potential nahe der elektrischen Masse aufweist.

11. Raketentriebwerk nach Anspruch 10, **dadurch gekennzeichnet, daß** der Schalter (9) einen Leistungstransistor oder einen Thyristor umfaßt.

12. Raketentriebwerk nach Anspruch 10 oder Anspruch 11, **dadurch gekennzeichnet, daß** der Kondensator (8) und der Schalter (9) in einem mit dem Körper des Zünders fest verbundenen Gehäuse (50) untergebracht sind.

13. Raketentriebwerk nach einem der Ansprüche 1 bis 9, **dadurch gekennzeichnet, daß** der Stromversorgungskreis eine Gleichstromversorgungsquelle (10), wenigstens einen Kondensator (8), eine Zerhackerschaltung (91) und einen Aufwärtstransformator (92) umfaßt, dessen Primärseite und Sekundärseite galvanisch isoliert sind, dessen Primärseite mit der Zerhackerschaltung (91) verbunden ist und dessen Sekundärseite zwischen der zweiten Elektrode (5) und dem die erste Elektrode bildenden Injektor (2) angeschlossen ist.

14. Raketentriebwerk nach einem der Ansprüche 1 bis 13, **dadurch gekennzeichnet, daß** der Isolator (4) ein erstes Isolatorteil (41), das sich ungehindert ausdehnen kann, und ein zweites Isolatorteil (42), das eine Dichtigkeit zwischen der zweiten Elektrode (5) und einem Isolatorträger (19) sicherstellt, umfaßt.

15. Raketentriebwerk nach Anspruch 14, **dadurch gekennzeichnet, daß** das erste Isolatorteil (41) wenigstens einen aus Bornitrid oder aus Aluminiumoxid ausgebildeten Keramikblock umfaßt.

16. Raketentriebwerk nach Anspruch 14 oder Anspruch 15, **dadurch gekennzeichnet, daß** das zweite Isolatorteil (42) aus Aluminiumoxid ausgebildet ist und einerseits an die zweite Elektrode (5) und andererseits an den Isolatorträger (19) gelötet ist.

17. Raketentriebwerk nach Anspruch 14 oder Anspruch 15, **dadurch gekennzeichnet, daß** das zweite Isolatorteil (42) aus einem flexiblen Material, umfassend eines der folgenden Materialien: PTFE, PTFCE, VESPEL, glasfaserbeladenes PTFE, ausgebildet ist und daß das zweite Isolatorteil (42) in einer an dem Isolatorträger (19a) angebrachten Stopfbuchse (23) angebracht ist.

18. Raketentriebwerk nach Anspruch 14 oder Anspruch 15, **dadurch gekennzeichnet, daß** das zweite Isolatorteil (42) mit einem Koaxialkabelsockel (52), der einen Verbinder (25) eines Koaxialkabels (24) aufnimmt, kombiniert ist.

19. Raketentriebwerk nach einem der Ansprüche 1 bis 18, **dadurch gekennzeichnet, daß** der Stromversorgungskreis dazu ausgelegt ist, die zweite Elektrode (5) auf ein Potential zwischen 100 und 500 V gegenüber dem Potential der durch den Injektor gebildeten ersten Elektrode zu bringen.

## Claims

1. A mono-propellant rocket engine comprising a main combustion chamber (17), an electrolytic ignitor, and a main injector (15), the electrolytic ignitor comprising an injector (2) constituting a first electrode and including a device (1) for injecting a first liquid mono-propellant that is electrically conductive, a second electrode (5) that is electrically insulated from the injector (2) by an insulator (4), a tank (12) for said first mono-propellant, a solenoid valve (11) interposed between said tank (12) and a distribution channel (3) serving to dispense the first mono-propellant in said first mono-propellant injector device constituted by at least one injection hole (1) opening out in the vicinity of the second electrode (5), and an electrical power supply circuit, the main injector being situated in the vicinity of the second electrode (5) to inject jets of a second liquid mono-propellant into the main combustion chamber (17) of the rocket engine, the rocket engine being **characterized in that** the second electrode (5) extends downstream beyond the injector (2), **in that** the first liquid mono-propellant is injected via said injection hole (1) in the form of a free jet that strikes the second electrode (5) in a zone situated outside the body of the injector (2), and **in that** the electrical power supply circuit is adapted to raise the second electrode (5) to a potential lying in the range 50 V to 1000 V relative to the potential of the first electrode, in such a manner that the dissipation of electrical power by ionic conduction in the free jet of the first mono-propellant injected via said injection hole (1) is capable of causing temperature to rise sufficiently to lead to spontaneous decomposition of the first mono-propellant and to the production of combustion gas (14) for ensuring ignition of the jets of the second mono-propellant coming from the main injector (15).

2. A rocket engine according to claim 1, **characterized in that** the dissipation of electrical power by ionic conduction in the free jet of the first mono-propellant injected via the injection hole (1) lies in the range 100 W to 1000 W per gram per second, and is capable of causing a temperature rise of 5000°C/s to 20,000°C/s.

3. A rocket engine according to claim 1 or claim 2, **characterized in that** the second electrode (5) is disposed centrally, and **in that** a plurality of injection holes (1) for the first mono-propellant and the outlets from the main injector (15) are disposed around the central electrode (5).

4. A rocket engine according to claim 1, **characterized in that** the injector device for injecting the first mono-propellant includes an annular channel (101).

5. A rocket engine according to any one of claims 1 to 4, **characterized in that** the second electrode (5) is made of a refractory metal of the tungsten or tungsten/rhenium type.

6. A rocket engine according to any one of claims 1 to 5, **characterized in that** the first mono-propellant present in the tank (12) is constituted by the same composition as the second mono-propellant delivered by the injector device (15) for injecting the second mono-propellant.

7. A rocket engine according to any one of claims 1 to 6, **characterized in that** the first mono-injector comprises an aqueous solution of nitrate and a water-soluble fuel.

8. A rocket engine according to claim 7, **characterized in that** the aqueous solution of nitrate comprises hydroxylammonium nitrate, ammonium di-nitramide, or hydrazinium nitro-formate.

9. A rocket engine according to claim 7 or claim 8, **characterized in that** the water-soluble fuel comprises an alcohol or triethanolammonium nitrate.

10. A torch according to any one of claims 1 to 9, **characterized in that** the electrical power supply circuit comprises a DC power supply (10, 7), at least one capacitor (8), and a switch (9), and **in that** the injector (2) constituting the first electrode presents a potential close to electrical ground.

11. A torch according to claim 10, **characterized in that** the switch (9) comprises a power transistor or a thyristor.

12. A torch according to claim 10 or claim 11, **characterized in that** the capacitor (8) and the switch (9) are housed in a housing (50) secured to the body of the ignitor.

13. A torch according to any one of claims 1 to 9, **characterized in that** the electrical power supply circuit comprises a DC power source (10), at least one capacitor (8), a chopper circuit (91), and a voltage-raising transformer (92) with its primary and secondary being electrically isolated from each other, the primary being connected to the chopper circuit (91) and the secondary being connected between the second electrode (5) and the injector (2) constituting the first electrode.

14. A torch according to any one of claims 1 to 13, **characterized in that** the insulator (4) comprises a first insulator portion (41) mounted to be able to expand freely, and a second insulator portion (42) providing sealing between the second electrode (5) and an insulator support (19).

15. A torch according to claim 14, **characterized in that** the first insulator portion (41) comprises at least one ceramic block made of boron nitride or of alumina.

16. A torch according to claim 14 or claim 15, **characterized in that** the second insulator portion (42) is made of alumina and is brazed firstly to the second electrode (5) and secondly to the insulator support (19).

17. A torch according to claim 14 or claim 15, **characterized in that** the second insulator portion (42) is made of a flexible material comprising one of the following materials: PTFE, PTFCE, Vespel, and fiberglass-filled PTFE, and **in that** the second insulator portion (42) is mounted in packing (23) mounted on the insulator support (19a).

18. A torch according to claim 14 or claim 15, **characterized in that** the second insulator portion (42) is combined with a coaxial cable socket (52) receiving a connector (25) for a coaxial cable (24).

19. A torch according to any one of claims 1 to 18, **characterized in that** the electrical power supply circuit is adapted to raise the second electrode (5) to a potential lying in the range 100 V to 500 V relative to the potential of the first electrode constituted by the injector.
